(19) Europäisches Patentamt / European Patent Office / Office européen des brevets

(11) **EP 2 491 513 B1**

(12) **EUROPÄISCHE PATENTSCHRIFT**

(45) Veröffentlichungstag und Bekanntmachung des Hinweises auf die Patenterteilung:
**07.02.2018 Patentblatt 2018/06**

(51) Int Cl.:
***G06F 21/00*** *(2013.01)*

(21) Anmeldenummer: **10794978.6**

(22) Anmeldetag: **15.12.2010**

(86) Internationale Anmeldenummer:
**PCT/EP2010/069782**

(87) Internationale Veröffentlichungsnummer:
**WO 2011/080079 (07.07.2011 Gazette 2011/27)**

(54) **VERFAHREN UND SYSTEM ZUM BEREITSTELLEN VON EDRM-GESCHÜTZTEN DATENOBJEKTEN**

METHOD AND SYSTEM FOR MAKING EDRM-PROTECTED DATA OBJECTS AVAILABLE

PROCÉDÉ ET SYSTÈME DE FOURNITURE D'OBJETS DE DONNÉES À PROTECTION ERDM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2010 DE 102010006432**
**29.12.2009 DE 102009060688**

(43) Veröffentlichungstag der Anmeldung:
**29.08.2012 Patentblatt 2012/35**

(73) Patentinhaber: **Siemens Aktiengesellschaft 80333 München (DE)**

(72) Erfinder:
• **FALK, Rainer 85435 Erding (DE)**
• **FRIES, Steffen 85598 Baldham (DE)**
• **SELTZSAM, Stefan 85737 Ismaning (DE)**

(56) Entgegenhaltungen:
**WO-A2-2007/000761     WO-A2-2008/104965**
**US-A- 5 917 912       US-A1- 2009 100 060**

**Beschreibung**

Die Erfindung betrifft ein Verfahren und ein System zum Bereitstellen von EDRM (Enterprise Digital Rights Management) geschützten Datenobjekten für einen Nutzer.

Das Enterprise Digital Rights Management (EDRM) bietet einen Zugriffsschutz auf Datenobjekte unabhängig von ihrem Speicherort. Ein EDRM-geschütztes Datenobjekt kann von einem autorisierten Anwender bzw. Nutzer und entsprechend seiner dafür geltenden Zugriffsrechte geöffnet und anschließend bearbeitet werden. Dies erfolgt unabhängig, an welchem Speicherort das Datenobjekt gespeichert ist oder auf welche Weise es übertragen wurde. Ein nicht autorisierter Dritter bzw. Außenstehender, der keine Zugriffsrechte zum Zugriff auf das Datenobjekt hat, kann daher beispielsweise mit einer Kopie des Datenobjektes, das er beispielsweise per E-Mail empfängt oder das er auf einem gefundenen USB-Stick entdeckt, nichts anfangen, das heißt ein Dritter kann auf das EDRM geschützte Datenobjekt nicht zugreifen.

Um ein derartiges Enterprise Digital Rights Management (EDRM) zu benutzen, müssen jedoch die jeweiligen Anwendungen bzw. Anwendungsprogramme dafür speziell angepasst werden, das heißt die Anwendungsprogramme müssen um eine EDRM-Funktionalität erweitert werden. Daher können zur Nutzung von EDRM nur spezielle dafür angepasste Anwendungsprogramme benutzt werden.

Bei einem EDRM-System verschlüsselt ein Herausgeber eines Datenobjekts, insbesondere eines Dokuments, das Datenobjekt bevor er es freigibt, und vergibt zusätzlich Zugriffsrechte für spezifische Nutzer oder Nutzergruppen auf das Datenobjekt. Dieses verschlüsselte Datenobjekt einschließlich der zugehörigen Zugriffsrechte wird dann an einen EDRM-Server übertragen. Der Herausgeber des Datenobjektes bzw. des Dokumentes generiert eine sogenannte Issuance Licence (IL), welche die Zugriffsrechte von Nutzern und Nutzergruppen enthält. Beispielsweise kann die Issuance Licence IL angeben, welcher Nutzer bzw. welche Nutzergruppe das Datenobjekt lesen, drucken oder speichern dürfen. Zusätzlich enthält die Issuance Licence IL einen symmetrischen kryptographischen Schlüssel, der zum Verschlüsseln des Datenobjektes durch den Herausgeber des jeweiligen Datenobjektes DO verwendet worden ist. Da der symmetrische kryptographische Schlüssel DK, der zum Verschlüsseln des Datenobjekts verwendet wird, eine geheime Information darstellt, wird die von dem Erzeuger bzw. Herausgeber des Datenobjekts generierte Issuance Licence IL mit einem öffentlichen Schlüssel $K_{pub}$ des EDRM-Servers verschlüsselt und der Herausgeber des Datenobjekts DO signiert die Issuance Licence. Der Dokumentenschlüssel DK zur Verschlüsselung des Datenobjektes DO kann zufällig oder pseudozufällig erzeugt werden. Die Berechtigungen der verschiedenen Nutzer und Nutzergruppen für die verschiedenen Zugriffsarten ergibt sich aus einer Zugriffskontrollliste ACL (Access Control List), die administrativ festgelegt werden kann. Die Zugriffskontrollliste ACL gibt an, welche Nutzer welche Zugriffsberechtigungen auf das jeweilige Datenobjekt DO besitzen. Nachdem die Issuance Licence IL von dem Datenobjektherausgeber an den EDRM-Server übertragen worden ist, wird die Signatur auf Seiten des EDRM-Servers verifiziert und anschließend die verschlüsselt übertragene Issuance Licence IL auf Seite des EDRM-Servers entschlüsselt. Der EDRM-Server speichert die übertragenen Informationen, das heißt insbesondere den Dokumentenschlüssel DK und die Zugriffskontrollliste ACL. Die Issuance Licence IL kann von dem Datenobjekt-Herausgeber geändert werden, beispielsweise wenn eine Person ein Projekt verlässt oder das Datenobjekt DO durch eine neuere Version ersetzt wird.

Um ein EDRM-geschütztes Datenobjekt DO zu nutzen, kann ein Anwender bzw. Nutzer über einen EDRM-Client auf den EDRM-Server zugreifen, um beispielsweise das EDRM-geschützte Datenobjekt zu bearbeiten. Der EDRM-Client kommuniziert mit dem EDRM-Server, um den symmetrischen Dokumentenschlüssel DK zu erhalten und um die Zugriffsrechte des vorliegenden Datenobjekts in Form einer sogenannten End-User-Licence EUL zu ermitteln. Diese End-User-Licence EUL wird von dem EDRM-Server erst nach einer Authentifizierung des Nutzers gegenüber dem EDRM-Server erstellt und an den entsprechenden EDRM-Client übermittelt. Der EDRM-Client übergibt die ermittelten Zugriffsrechte an ein EDRM-fähiges Anwendungsprogramm, das für die Einhaltung der Zugriffsrechte zuständig ist. Die Entschlüsselung des Datenobjektes DO mit dem Datenobjektschlüssel DK erfolgt durch den EDRM-Client ebenso wie eine später eventuell nötige erneute Verschlüsselung des Datenobjekts. Der Datenobjektschlüssel DK kann von dem EDRM-Client beispielsweise durch Code Obfuscation oder dergleichen selbst vor einem Nutzer bzw. Anwender mit Administrationsrechten geheimgehalten werden. Ebenso kann der Datenobjektschlüssel im EDRM Client in gesicherten Speicherbereichen oder auch unter Zuhilfenahme eines Hardware Security Moduls (z.B. TPM - Trusted Platform Module) gehalten werden.

Dokument US5917912 beschreibt ein EDRM-fähige Umgebung, welche aber in sich geschlossen ist und auch Integration mit anderen Systemen nicht vorgesehen ist. Herkömmliche EDRM-Systeme unterstützen allerdings nicht den Zugriff auf Datenobjekte DO durch Nutzer, die beispielsweise in unterschiedlichen Unternehmen mit unterschiedlichen EDRM-Systemen arbeiten. Eine Integration bzw. eine Zusammenarbeit von derartigen Nutzern bzw. Anwendungen, beispielsweise im Zuge eines Joint Ventures von unterschiedlichen Unternehmen, ist mit herkömmlichen EDRM-Systemen nicht möglich.

Es ist daher eine Aufgabe der vorliegenden Erfindung ein Verfahren und ein System zum Bereitstellen eines EDRM-geschützten Datenobjektes zu schaffen, die einen dezentralen Zugriff auf EDRM-geschützte Datenobjekte durch Nutzer unterschiedlicher Instanzen erlauben. Diese Aufgabe wird erfindungsgemäß durch ein Verfahren mit den in Patentanspruch 1 angegebenen Merkmalen gelöst.

Die Erfindung schafft ein Verfahren zum Bereitstellen mindestens eines EDRM (Enterprise Digital Rights Management) geschützten Datenobjektes DO für einen Nutzer,

wobei Zugriffsrechte DP auf das EDRM-geschützte Datenobjekt DO in Abhängigkeit von Teilzugriffsrechten $P_i$ auf mindestens ein oder mehrere Datenobjekte gebildet werden, die in dem EDRM-geschützten Datenobjekt DO enthalten sind.

Bei einer Ausführungsform des erfindungsgemäßen Verfahrens werden die Zugriffsrechte DP auf das EDRM-geschützte Datenobjekt DO mittels einer Zugriffsrechteableitungsfunktion PDF (Policy Derivation Function) in Abhängigkeit von den Zugriffsrechten $P_i$ durch einen Client-Rechner des Nutzers berechnet.

Bei einer möglichen Ausführungsform des erfindungsgemäßen Verfahrens wird die Zugriffsrechteableitungsfunktion PDF durch eine logische Verknüpfungsfunktion gebildet.

Bei einer möglichen Ausführungsform des erfindungsgemäßen Verfahrens bildet die logische Zugriffsrechteableitungsfunktion PDF eine Schnittmenge der Teilzugriffsrechte $P_i$.

Bei einer weiteren Ausführungsform des erfindungsgemäßen Verfahrens bildet die logische Zugriffsrechteableitungsfunktion PDF eine Vereinigungsmenge der Teilzugriffsrechte $P_i$.

Bei einer weiteren Ausführungsform des erfindungsgemäßen Verfahrens bildet die logische Zugriffsrechteableitungsfunktion PDF eine Differenzmenge der Teilzugriffsrechte $P_i$.

Bei einer möglichen Ausführungsform des erfindungsgemäßen Verfahrens wird die Zugriffsrechteableitungsfunktion PDF durch eine Mehrheitsentscheidung der von unterschiedlichen EDRM-Servern ausgelesenen Teilzugriffsrechte gebildet.

Bei einer Ausführungsform des erfindungsgemäßen Verfahrens wird ein Datenobjektschlüssel DK des EDRM-geschützten Datenobjektes DO in Abhängigkeit von Teilschlüsseln $K_i$ durch den Client-Rechner des Nutzers berechnet.

Bei einer Ausführungsform des erfindungsgemäßen Verfahrens wird ein von dem Client-Rechner erzeugtes Datenobjekt DO mit dem berechneten Datenobjektschlüssel DK verschlüsselt.

Bei einer Ausführungsform des erfindungsgemäßen Verfahrens wird der Datenobjektschlüssel DK mittels einer Schlüsselableitungsfunktion KDF berechnet.

Bei einer Ausführungsform des erfindungsgemäßen Verfahrens ist die Schlüsselableitungsfunktion KDF eine logische Verknüpfungsfunktion.

Bei einer weiteren möglichen Ausführungsform des erfindungsgemäßen Verfahrens ist die Schlüsselableitungsfunktion KDF eine Konkatenationsfunktion.

Bei einer weiteren möglichen Ausführungsform des erfindungsgemäßen Verfahrens ist die Schlüsselableitungsfunktion KDF eine Hash-Funktion.

Bei einer weiteren möglichen Ausführungsform des erfindungsgemäßen Verfahrens weist die Schlüsselableitungsfunktion KDF eine Verknüpfung verschiedener Funktionen, insbesondere einer Konkatenationsfunktion, einer Hash-Funktion und einer logischen Verknüpfungsfunktion, auf.

Bei einer Ausführungsform des erfindungsgemäßen Verfahrens werden die Teilzugriffsrechte $P_i$ zum Zugriff auf die in dem EDRM-geschützen Datenobjekt enthaltenen Datenobjekte und die Teilschlüssel K zur Berechnung des Datenobjektschlüssels von unterschiedlichen EDRM-Servern bereitgestellt.

Bei einer Ausführungsform des erfindungsgemäßen Verfahrens werden die Teilzugriffsrechte $P_i$ und die Teilschlüssel $K_i$ nach erfolgter Authentisierung des Nutzers gegenüber dem jeweiligen EDRM-Server auf Anfrage des Nutzers unter Angabe der Dokumentenidentifizierung D-ID des Datenobjektes DO von den EDRM-Servern an den Client-Rechner des Nutzers übertragen.

Bei einer Ausführungsform des erfindungsgemäßen Verfahrens wird für ein durch den Client-Rechner des Nutzers erzeugtes Datenobjekt DO ein zugehöriges Rechteobjekt RO generiert, das Zugriffsrechte $P_i$ von Nutzern oder Nutzergruppen auf das erzeugte Datenobjekt DO angibt.

Bei einer Ausführungsform des erfindungsgemäßen Verfahrens wird das zu dem Datenobjekt DO zugehörige Rechteobjekt RO mit einem öffentlichen Schlüssel $K_{pub}$ eines EDRM-Servers verschlüsselt und zusammen mit dem durch den berechneten Datenobjektschlüssel DK verschlüsselten Dateninhalt DI des Datenobjektes DO und der Dokumentenidentifizierung D-ID des Datenobjektes an den jeweiligen EDRM-Server signiert übertragen.

Bei einer Ausführungsform des erfindungsgemäßen Verfahrens entschlüsselt der EDRM-Server nach Verifizierung der empfangenen Signatur das verschlüsselt übertragene Rechteobjekt RO mit einem privaten Schlüssel $K_{priv}$ des EDRM-Servers und speichert das entschlüsselte Rechteobjekt RO.

Bei einer Ausführungsform des erfindungsgemäßen Verfahrens entschlüsselt der EDRM-Server nach Verifizierung der empfangenen Signatur den verschlüsselt übertragenen Dateninhalt des Datenobjektes DO mit dem Datenobjektschlüssel DK des Datenobjektes und speichert den entschlüsselten Dateninhalt.

Bei einer Ausführungsform des erfindungsgemäßen Verfahrens speichert der EDRM-Server den entschlüsselten Dateninhalt des Datenobjektes oder den noch verschlüsselten Dateninhalt bei sich.

Bei einer alternativen Ausführungsform des erfindungsgemäßen Verfahrens speichert der EDRM-Server den entschlüsselten Dateninhalt des Datenobjektes in einem File-Server.

Bei einer Ausführungsform des erfindungsgemäßen Verfahrens wird das Datenobjekt DO durch ein Dokument gebildet.

Bei einer alternativen Ausführungsform des erfindungsgemäßen Verfahrens wird das Datenobjekt DO durch eine Softwarekomponente gebildet.

Die Erfindung schafft ferner ein System zum Bereitstellen von EDRM-geschützten Datenobjekten für Nutzer,

wobei Zugriffsrechte DP auf ein EDRM-geschütztes Datenobjekt DO in Abhängigkeit von Teilzugriffsrechten $P_i$ auf mindestens ein oder mehrere Datenobjekte gebildet werden, die in dem jeweiligen EDRM-geschützten Datenobjekt DO enthalten sind.

Bei einer Ausführungsform des erfindungsgemäßen Systems werden die Zugriffsrechte DP auf das EDRM-geschützte Datenobjekt DO durch einen Client-Rechner des Nutzers mittels einer Zugriffsrechteableitungsfunktion PDF in Abhängigkeit von den Teilzugriffsrechten $P_i$ berechnet, die von unterschiedlichen EDRM-Servern bereitgestellt werden.

Bei einer Ausführungsform des erfindungsgemäßen Systems wird ein Datenobjektschlüssel DK des EDRM-geschützten Datenobjektes durch den Client-Rechner des Nutzers mittels einer Schlüsselableitungsfunktion KDF in Abhängigkeit von Teilschlüsseln $K_i$ berechnet, die von unterschiedlichen EDRM-Servern ausgelesen werden.

Bei einer möglichen Ausführungsform des erfindungsgemäßen Systems ist der Client-Rechner mit den EDRM-Servern über ein Datennetzwerk verbunden.

Im Weiteren werden bevorzugte Ausführungsformen des erfindungsgemäßen Verfahrens und des erfindungsgemäßen System zum Bereitstellen des EDRM-geschützten Datenobjektes unter Bezugnahme auf die beigefügten Figuren beschrieben.

Es zeigen:

Fig. 1    ein Diagramm zur Darstellung eines Ausführungsbeispiels eines erfindungsgemäßen Systems zum Bereitstellen des EDRM-geschützten Datenobjektes;

Fig. 2    ein Signaldiagramm zur Darstellung eines Schrittes bei dem erfindungsgemäßen Verfahren;

Fig. 3    ein weiteres Signaldiagramm zur Darstellung eines Schrittes bei dem erfindungsgemäßen Verfahren;

Fig. 4    ein weiteres Signaldiagramm zur Darstellung eines weiteren Schrittes bei dem erfindungsgemäßen Verfahren.

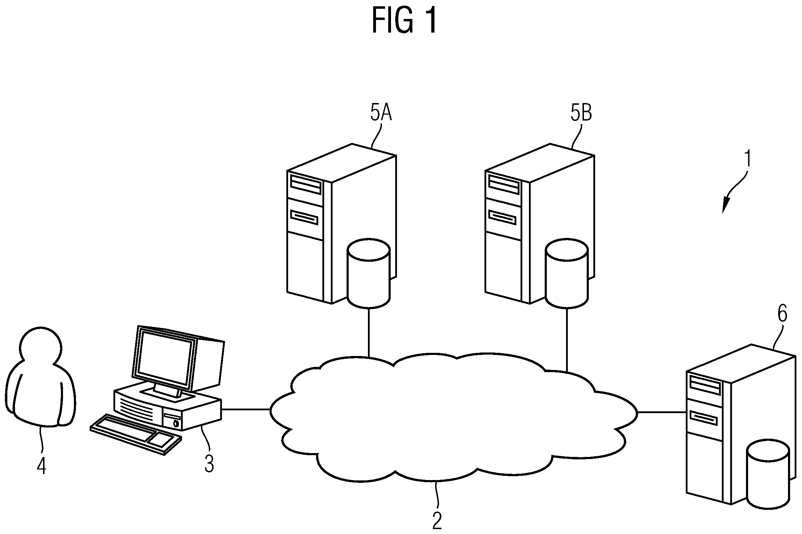

Wie man aus Fig. 1 erkennen kann, weist ein erfindungsgemäßes System 1 zum Bereitstellen von EDRM-geschützten Datenobjekten bei dem in Fig. 1 dargestellten Ausführungsbeispiel ein Datennetzwerk 2 auf, an das mindestens ein Client-Rechner 3 eines Anwenders bzw. Nutzers 4 angeschlossen ist. Weiterhin sind bei dem in Fig. 1 dargestellten Ausführungsbeispiel zwei EDRM-Server 5A, 5B vorgesehen. Die Anzahl der EDRM-Server 5 kann variieren. In weiteren Ausführungsbeispielen kann beispielsweise die Anzahl der EDRM-Server 5 mehr als zwei betragen. Bei dem in Fig. 1 dargestellten Ausführungsbeispiels des erfindungsgemäßen Systems 1 ist ferner ein File-Server 6 an das Netzwerk 2 angeschlossen. Bei dem Netzwerk 2 kann es sich um ein beliebiges Netzwerk handeln, beispielsweise auch um ein Netzwerk, das sich aus mehreren Netzwerken zusammensetzt. Bei dem Netzwerk 2 kann es sich beispielsweise um das Internet handeln. Das Netzwerk 2 kann auch ein lokales (LAN) oder Wide Area Network (WAN) sein. Der Client-Rechner 3 sowie die EDRM-Server 5 und der File-Server 6 sind über eine Schnittstelle mit dem Datennetzwerk 2 verbunden. Die Schnittstelle kann drahtlos oder drahtgebunden sein. Bei dem Client-Rechner 3 kann es sich um ein Festgerät aber auch um ein mobiles Endgerät handeln. Bei dem System 1 werden Zugriffsrechte DP auf ein EDRM-geschütztes Datenobjekt DO in Abhängigkeit von Teilzugriffsrechten $P_i$ auf mindestens ein oder mehrere Datenobjekte gebildet, die in dem jeweiligen EDRM-geschützten Datenobjekt DO enthalten sind. Dabei werden die Zugriffsrechte DP auf das EDRM-geschützte Datenobjekt DO durch den Client-Rechner 3 des Nutzers 4 mittels einer Zugriffsrechteableitungsfunktion PDF (Policy Derivation Function) in Abhängigkeit von den Teilzugriffsrechten $P_i$ berechnet. Diese Teilzugriffsrechte $P_i$ werden von den unterschiedlichen EDRM-Servern 5A, 5B bereitgestellt.

Bei der Zugriffsrechteableitungsfunktion PDF kann es sich um eine logische Verknüpfungsfunktion handeln. Bei einer möglichen Ausführungsform wird die logische Zugriffsrechteableitungsfunktion PDF durch eine Schnittmenge der Teilzugriffsrechte $P_i$ gebildet, das heißt durch eine logische UND-Verknüpfung der Teilzugriffsrechte $P_i$. Dies bedeutet, dass eine Zugriffsberechtigung von mehreren Teil-Policies gewährt wird:

$$DP = P_1 \cap P_2 \cap ... P_n$$

Bei einer weiteren Ausführungsform wird die logische Zugriffsrechteableitungsfunktion PDF durch eine Vereinigungsmenge der Teilzugriffsrechte $P_i$ gebildet, das heißt die Teilzugriffsrechte $P_i$ werden logisch miteinander ODER verknüpft. In diesem Falle muss eine Zugriffsberechtigung von einer der Teil-Policies gewährt werden:

$$DP = P_1 \cup P_2 \cup ...P_n$$

Bei einer weiteren Ausführungsform des erfindungsgemäßen Systems wird die logische Zugriffsrechteableitungsfunktion PDF durch eine Differenzmenge der Teilzugriffsrechte $P_i$ gebildet. Das bedeutet, dass eine Zugriffsberechtigung von einer ersten Teil-Policy $P_1$ gewährt wird, jedoch nicht von einer zweiten Teil-Policy $P_2$ gewährt wird:

$$DP = P_1 / P_2$$

Bei einer weiteren möglichen Ausführungsform wird die Zugriffsrechteableitungsfunktion PDF durch eine Mehrheitsentscheidung der von unterschiedlichen EDRM-Servern 5 ausgelesenen Teilzugriffsrechte $P_i$ gebildet. Sind beispielsweise zwei EDRM-Server 5A, 5B vorhanden, müssen bei diesem Ausführungsbeispiel mehr als 50%, das heißt beide EDRM-Server 5A, 5B das Zugriffsrecht gewähren. Sind drei EDRM-Server vorhanden, müssen mindestens zwei der drei EDRM-Server das Zugriffsrecht gewähren. Dadurch können EDRM-Server 5, die aufgrund eines vorübergehenden Ausfalls nicht alle Rechteaktualisierungen umgesetzt haben, jedoch inzwischen wieder End-User-Licence (EUL) ausgeben, überstimmt werden. Auch der Ausfall eines EDRM-Servers 5 kann von dem EDRM-Client-Rechner 3 in diesem Fall ignoriert werden (im Gegensatz zu einer reinen UND-Verknüpfung der Teilzugriffsrechte).

Bei einer möglichen Ausführungsform verfügt der Client-Rechner 3 über unterschiedliche Zugriffsrechteableitungsfunktionen PDF, aus denen der Anwender 4 auswählen bzw. die der Anwender 4 selektieren kann. Bei einer Ausführungsform des erfindungsgemäßen Systems 1 wird ein Datenobjektschlüssel DK des EDRM-geschützten Datenobjektes DO durch den Client-Rechner 3 des Nutzers 4 mittels einer Schlüsselableitungsfunktion KDF (Key Derivation Function) in Abhängigkeit von Teilschlüsseln $K_i$ berechnet, die von unterschiedlichen EDRM-Servern 5A, 5B ausgelesen werden. Ein von dem Client-Rechner 3 erzeugtes Datenobjekt DO wird mit dem berechneten Datenobjektschlüssel DK verschlüsselt.

Dieser Datenobjektschlüssel DK wird mittels der Schlüsselableitungsfunktion KDF berechnet. Bei einer möglichen Ausführungsform ist die Schlüsselableitungsfunktion KDF eine logische Verknüpfungsfunktion. Beispielsweise kann die logische Verknüpfungsfunktion eine Exklusiv-oder-Verknüpfung sein. Bei einer weiteren Ausführungsform ist die Schlüsselableitungsfunktion KDF eine Konkatenationsfunktion, bei der verschiedene Schlüssel $K_i$ hintereinander angehängt werden. Bei einer weiteren Ausführungsform ist die verwendete Schlüsselableitungsfunktion KDF eine Hash-Funktion, insbesondere eine MD5, eine SHA-1 oder eine SHA256-Hash-Funktion. Weiterhin kann die Schlüsselableitungsfunktion KDF durch eine Verknüpfung verschiedener Funktionen unterschiedlichen Typs gebildet werden, beispielsweise eine Hash-Funktion und einer logischen Verknüpfung von Schlüsseln, beispielsweise SHA256 ($K_1$ XOR $K_2$).

Für die Ermittlung der Zugriffsrechte DP auf das EDRM-geschützte Datenobjekt DO in Abhängigkeit von Teilzugriffsrechten $P_i$ bei mehreren EDRM-Servern 5 gilt allgemein:

$$DP = PDF(P_1, P_2, ..., P_n) \, .$$

Für die Berechnung des Datenobjektschlüssels DK mit einer Schlüsselableitungsfunktion KDF aus mehreren Teilschlüsseln $K_i$, die von unterschiedlichen EDRM-Servern 5 ausgelesen werden können, gilt allgemein:

$$DK = KDF(K_1, K_2, ..., K_n) \, .$$

Die Teilzugriffsrechte $P_i$ zum Zugriff auf die in dem EDRM-geschützten Datenobjekt DO enthaltenen Datenobjekte und die Teilschlüssel $K_i$ zur Berechnung des Datenobjektschlüssels DK werden von unterschiedlichen EDRM-Servern 5 ausgelesen.

Bei einer möglichen Ausführungsform des erfindungsgemäßen Systems 1 werden die Teilzugriffsrechte $P_i$ und die Teilschlüssel $K_i$ nach erfolgter Authentisierung des Nutzers gegenüber den jeweiligen EDRM-Servern 5 auf Anfrage des Nutzers unter Angabe der Dokumentenidentifizierung D-ID des Datenobjektes von den EDRM-Servern 5 an den Client-Rechner 3 des Nutzers übertragen. Dabei kann für einen durch den Client-Rechner 3 des Nutzers 4 erzeugtes Datenobjekt DO ein zugehöriges Rechteobjekt RO generiert werden, das Zugriffsrechte $P_i$ von Nutzern oder Nutzergruppen auf das erzeugte Datenobjekt angibt. Das zu dem Datenobjekt DO zugehörige Rechteobjekt DO kann vorzugsweise mit einem öffentlichen Schlüssel $K_{pub}$ eines EDRM-Servers 5 verschlüsselt zusammen mit dem durch den berechneten Datenobjektschlüssel DK verschlüsselten Dateninhalt DI des Datenobjektes DO und der Dokumentenidentifizierung D-ID des Datenobjektes an den jeweiligen EDRM-Server 5 signiert übertragen werden. Der EDRM-Server 5 entschlüsselt nach Verifizierung der empfangenen Signatur das verschlüsselt übertragenen Rechteobjekt RO mit einem privaten Schlüssel $K_{priv}$ und speichert das verschlüsselte Rechteobjekt RO. Weiterhin entschlüsselt der EDRM-Server 5 nach Verifizierung der empfangenen Signatur den verschlüsselt übertragenen Dateninhalt des Datenobjekt DO mit dem Datenobjektschlüssel DK des jeweiligen Datenobjektes und speichert den entschlüsselten Dateninhalt. Der EDRM-Server 5, beispielsweise der EDRM-Server 5A oder 5B in Fig. 1, kann den entschlüsselten Dateninhalt des Datenobjektes DO bei sich in einer Speichereinheit speichern oder bei dem in Fig. dargestellten File-Server 6.

Bei dem erfindungsgemäßen System 1, wie es in Fig. 1 dargestellt ist, kann die Kontrolle über den EDRM-Schutz eines Datenobjekts auf mehrere Beteiligte aufgeteilt werden. Insbesondere ist es möglich, dass kein EDRM-Server 5 allein über den Dokumentenschlüssel DK verfügt. Dies ist insbesondere für eine kollaborative Einsatzumgebung bzw. Anwendung vorteilhaft, in der EDRM-geschützte Datenobjekte DO organisationsübergreifend erstellt und ausgetauscht werden. In diesem Fall hat ein Beteiligter nicht allein die Kontrolle darüber, welche Nutzer bzw. Nutzergruppen auf ein Datenobjekt DO zugreifen können. Bei dem Datenobjekt DO handelt es sich beispielsweise um ein Dokument. Weiterhin ist es möglich, dass es sich bei dem Datenobjekt DO um eine Softwarekomponente handelt. Diese Softwarekomponente ist beispielsweise ein ausführbarer Programmcode. Weiterhin kann es sich bei der Softwarekomponente auch um eine Virtual Machine (VM), insbesondere eine Virtual Box handeln.

Beim erfindungsgemäßen System 1 wird ferner sichergestellt, dass durch Konfigurationsfehler an einem EDRM-Server 5 gewisse Einschränkungen, die auf einem anderen EDRM-Server vorgegeben sind, nicht umgangen werden können.

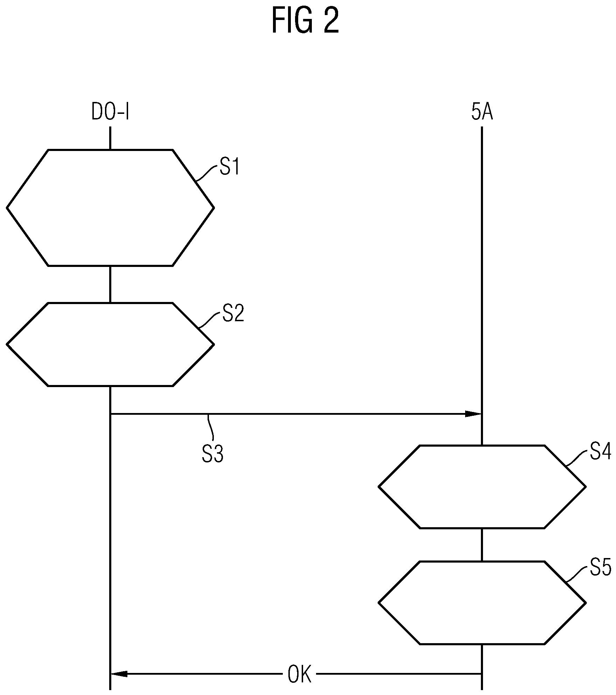

Fig. 2 zeigt ein Signaldiagramm zur Darstellung eines Verfahrensschrittes des erfindungsgemäßen Verfahrens.

In Fig. 2 ist dargestellt, wie ein Datenobjekt von dem erfindungsgemäßen System 1 und Verfahren durch Hinterlegen von Teilinformationen, insbesondere von Teil-Policies bzw. Teilzugriffsrechten $P_i$ und von Teilschlüsseln $K_i$ geschützt werden kann. Ein Datenobjektherausgeber bzw. Datenobjekt-Issuer (DO-I) erzeugt ein Datenobjekt DO. Beispielsweise kann das Datenobjekt an einem Client-Rechner 3 durch einen Nutzer 4 erzeugt werden.

Wie in Fig. 2 dargestellt, erzeugt der Datenobjektherausgeber DO-I in einem Schritt S1 das Datenobjekt und ein zugehöriges Rechteobjekt, welches Teil-Zugriffsrechte $P_i$ von Nutzern oder Nutzergruppen auf das erzeugte Datenobjekt DO angibt. Bei dem Rechteobjekt RO kann es sich beispielsweise um eine Issuance Licence IL handeln. Diese Issuance Licence IL als Rechteobjekt umfasst beispielsweise den Dokumentenschlüssel DK und eine Zugriffskontrollliste ACL (Access Control List), die die Zugriffsrechte von Nutzern bzw. Nutzergruppen auf das jeweilige Datenobjekt, das eine bestimmte Dokumenten-ID D-ID aufweist, angibt. In einem Schritt S2 werden die Dateninhalte des Datenobjektes DO verschlüsselt und signiert. Das zu dem Datenobjekt DO zugehörige Rechteobjekt RO wird beispielsweise mit einem öffentlichen Schlüssel $K_{pub}$ eines EDRM-Servers 5 verschlüsselt und zusammen mit dem durch den berechneten Datenobjektschlüssel DK verschlüsselten Dateninhalte DI des Datenobjektes DO sowie der Dokumentenidentifizierung D-ID des Datenobjektes DO an den jeweiligen EDRM-Server 5, beispielsweise an den in Fig. 2 dargestellten EDRM-Server 5A, signiert in einen Schritt S3 übertragen. Die Datenübertragung erfolgt beispielsweise von dem Client-Rechner 3 zu dem EDRM-Server 5A über das Netzwerk 2. Auf Seiten des EDRM-Server 5A wird in einem Schritt S4 zunächst die empfangene Signatur verifiziert und anschließend das übertragene Rechteobjekt RO bzw. die Issue Licence IL mit einem privaten Schlüssel $K_{priv}$ des EDRM-Servers 5A entschlüsselt. Das entschlüsselte Rechteobjekt RO kann anschließend bei dem EDRM-Server 5A gespeichert werden. In einem weiteren Schritt S5 speichert der EDRM-Server 5A den Datenobjektschlüssel DK des Datenobjekts sowie die zugehörige Zugriffskontrollliste ACL. Diese Zugriffskontrollliste ACL kodiert welche Nutzer welche Zugriffsberechtigungen auf dieses Datenobjekt DO besitzen. Die Zugriffsberechtigungen bzw. Zugriffskontrollliste ACL können beispielsweise durch einen Administrator festgelegt werden.

Bei dem in Fig. 2 dargestellten Verfahrensschritt S2 wird das von dem Client-Rechner 3 erzeugte Datenobjekt mit einem Datenobjektschlüssel DK verschlüsselt, der in Abhängigkeit von Teilschlüsseln $K_i$ durch den Client-Rechner 3 berechnet wird. Dieser Datenobjektschlüssel DK wird beispielsweise mittels einer gespeicherten Schlüsselableitungsfunktion KDF berechnet. Diese Schlüsselableitungsfunktion KDF kann eine logische Verknüpfungsfunktion sein. Alternativ kann es sich bei der Schlüsselableitungsfunktion KDF um eine Konkatenationsfunktion, eine Hash-Funktion oder auch um eine Verknüpfung verschiedener Schlüsselableitungsfunktionen handeln. Das zu dem Datenobjekt zugehörige Rechteobjekt RO bzw. die Issue Licence IL wird mit dem öffentlichen Schlüssel $K_{pub}$ des EDRM-Servers 5A verschlüsselt und zusammen mit dem durch den berechneten Datenobjektschlüssel DK verschlüsselten Dateninhalt des Datenobjektes sowie der Dokumentenidentifizierung D-ID des Datenobjektes an den EDRM-Server 5A in signierter Form im Schritt S3 übertragen.

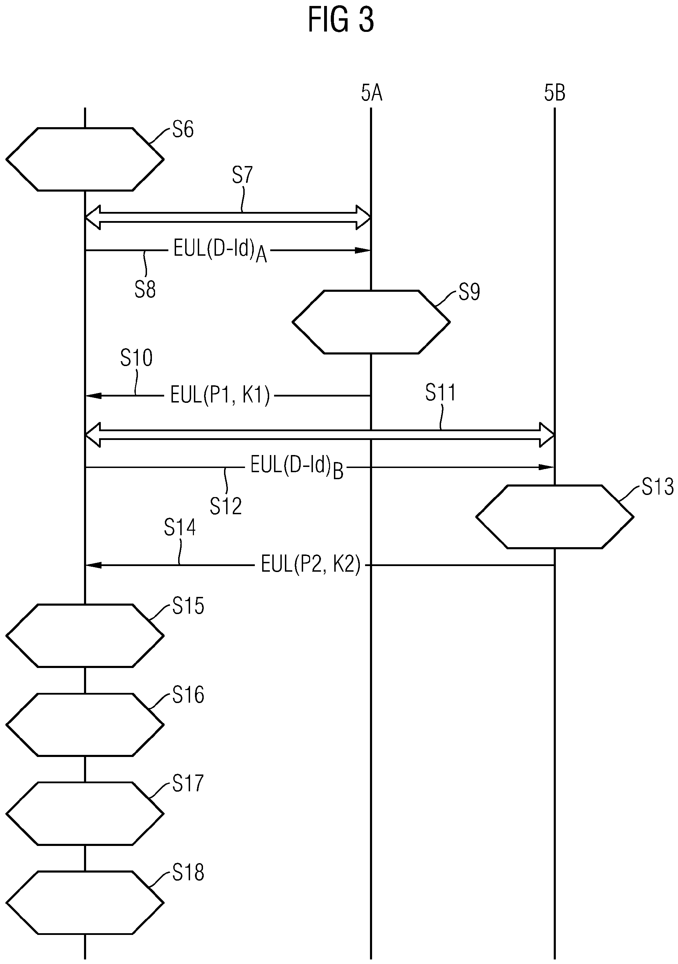

Auf dem EDRM-Server 5A werden Teilinformationen hinterlegt bzw. gespeichert, das heißt eine Teil-Policy bzw. Zugriffsrechte $P_i$ und Teilschlüssel $K_i$. Fig. 3 zeigt ein weiteres Signaldiagramm zur Darstellung des Erzeugens eines EDRM-geschützten Datenobjekts. In einem Schritt S6 generiert bzw. erzeugt ein Datenobjekterzeuger beispielsweise ein Anwender 4, beispielsweise in einem Unternehmen C, an seinem Client-Rechner 3 ein Datenobjekt, insbesondere ein Dokument, mit einer eindeutigen Datenobjekt-Identifizierung (D-ID). Dieses Datenobjekt DO kann aus mehreren Teildatenobjekten bestehen.

Beispielsweise kann ein erzeugtes Dokument zwei Teildokumente $D_A$, $D_B$ von unterschiedlichen zusammenarbeitenden Unternehmen A, B umfassen. In einem weiteren Schritt S7 erfolgt in dem dargestellten Beispiel eine Nutzeridentifizierung des Anwenders 4 gegenüber einem ersten EDRM-Server 5A. Dieser EDRM-Server 5A kann beispielsweise der EDRM-Server des Unternehmens A sein. Nach erfolgreicher Authentisierung des Anwenders überträgt der Anwender bzw. Nutzer in einem Schritt S8 eine Anforderung an den EDRM-Server 5A für eine End-User-Licence EUL für das in dem erzeugten durch die Dokumenten-ID identifizierte Datenobjekt DO enthaltene Teildatenobjekt $D_A$. In einem weiteren Schritt S9 bestimmt der EDRM-Server 5A einen Teilschlüssel $K_1$ und die Anwenderzugriffsrechte $P_1$ für das, jeweilige Teil-Datenobjekt, das heißt, dass für das Teil-Datenobjekt $D_A$. Der EDRM-Server 5A erstellt eine entsprechende End-User-Licence EUL und überträgt diese EUL (P1, K1) im Schritt S10 zu dem Erzeuger des Datenobjekts DO. Der Datenobjekterzeuger authentisiert sich ferner in einem Schritt S11 gegenüber dem zweiten EDRM-Server 5B und fordert anschließend eine End-User-Licence EUL für das andere Teil-Datenobjekt $D_B$ anhand dessen Daten-Objekt-$ID_B$ von diesem zweiten EDRM-Server 5B im Schritt S12. Im dargestellten Beispiel kann das generierte Dokument DO zwei Teildokumente $D_A$, $D_B$ aufweisen, die durch unterschiedliche Dokumenten- bzw. Datenobjekt-IDs D-$ID_A$, D-$ID_B$ identifiziert werden. In der Anforderung im Schritt S8 wird eine erste EUL für die Dokumenten-ID D-$ID_A$ und im Schritt S12 eine Anforderung für eine weitere EUL, für das Datenobjekt $D_B$ mit der ID D-$ID_B$ übertragen. Im Schritt S13 bestimmt der zweite EDRM-Server 5B den Dokumentenschlüssel $K_2$ bzw. Teilschlüssel $K_2$ für das zweite Datenobjekt bzw. Dokument $D_B$ und die zugehörigen Zugriffsrechte $P_2$ für dieses zweite Teildatenobjekt $D_B$. Der zweite EDRM-Server 5B kann sich beispielsweise bei einem zweiten Unternehmen B befinden. In einem weiteren Schritt S14 überträgt der zweite EDRM-Server 5B den ermittelten Teilschlüssel $K_2$ und die Zugriffsrechte $P_2$ zu dem Teildatenobjekt $D_B$ über das Netzwerk 2 zu dem Dokumentenerzeuger, der das aus den zwei Teildokumenten $D_A$, $D_B$ bestehende Datenobjekt DO generiert hat. Dieser Dokumentenerzeuger ist beispielsweise ein Anwender eines weiteren Unternehmen C, welcher das Dokument auf Basis von Dokumenten des Unternehmens A und des Unternehmens B erstellt.

In einem weiteren Schritt S15 werden die Zugriffsrechte DP auf das Datenobjekt DO in Abhängigkeit von den im Schritt S10, und im Schritt S14 empfangenen Teilzugriffsrechten $P_1$, $P_2$, auf das Datenobjekt $D_A$ und das Datenobjekt $D_B$ gebildet, die in dem EDRM geschützten Datenobjekt DO enthalten sind. Diese Zugriffsrechte DP auf das Datenobjekt DO werden vorzugsweise mittels einer Zugriffsrechteableitungsfunktion PDF in Abhängigkeit von den Teilzugriffsrechten $P_1$, $P_2$ durch einen Client-Rechner 3 des Nutzers 4 berechnet, der in dem angegebenen Beispiel der Dokumentenerzeuger für das Datenobjekt DO ist. Diese Zugriffsrechteableitungsfunktion PDF ist beispielsweise eine logische Verknüpfungsfunktion, die eine Schnittmenge der Teilzugriffsrechte $P_1$, $P_2$ bildet oder eine Vereinigungsmenge der Teilzugriffsrechte $P_1$ und $P_2$ bildet oder eine Differenzmenge der Teilzugriffsrechte $P_1$ und $P_2$ bildet. Ferner kann die Zugriffsrechteableitungsfunktion PDF durch eine Mehrheitsentscheidung der von den unterschiedlichen EDRM-Servern 5A, 5B ausgelesenen Zeitzugriffsrechte $P_1$ und $P_2$ gebildet werden.

In einem Schritt S16 wird ein Datenobjektschlüssel DK des EDRM-geschützten Datenobjektes DO in Abhängigkeit von den beiden in Schritt S10 und S14 übertragenen Teilschlüsseln $K_1$, $K_2$ berechnet. Das von dem Datenobjekterzeuger im Schritt S6 erzeugte Datenobjekt wird anschließend im Schritt S17 mit dem im Schritt S16 berechneten Datenobjektschlüssel DK verschlüsselt. Der Datenobjektschlüssel DK wird im Schritt S16 vorzugsweise mittels einer gespeicherten Schlüsselableitungsfunktion KDF berechnet. Diese Schlüsselableitungsfunktion KDF kann eine logische Verknüpfungsfunktion, eine Konkatenationsfunktion, eine Hash-Funktion oder eine Verknüpfung verschiedener derartiger Funktionen sein.

Anschließend wird in Schritt S18 das EDRM-geschützte Datenobjekt gespeichert, beispielsweise in einem Speicherbereich des Client-Rechners 3 des jeweiligen Nutzers.

Wie man aus Fig. 3 erkennen kann, werden die Teilzugriffsrechte $P_1$, $P_2$ zum Zugriff auf die beiden in dem EDRM-geschützten Datenobjekt DO enthaltenden Datenobjekte DA, DB und die zugehörigen Teilschlüssel $K_1$, $K_2$ zur Berechnung des Datenobjektschlüssels DK von unterschiedlichen EDRM-Servern 5A, 5B auf Anfrage ausgelesen. Die Teilzugriffsrechte $P_1$, $P_2$ und die Teilschlüssel $K_1$, $K_2$ werden erst nach erfolgter Authentisierung des Nutzers gegenüber den jeweiligen EDRM-Servern 5A, 5B auf Anfrage des Nutzers unter Angabe der Dokumentenidentifizierung D-ID des jeweiligen Datenobjektes von den EDRM-Servern 5A, 5B an den Client-Rechner 3 des Nutzers bzw. Anwenders übertragen.

Bei einer möglichen Ausführungsform sind die Zugriffsrechteableitungsfunktion PDF und die Schlüsselableitungsfunktion KDF öffentlich zugänglich auf einem Server des Netzwerkes 2 gespeichert und können bei Bedarf heruntergeladen werden.

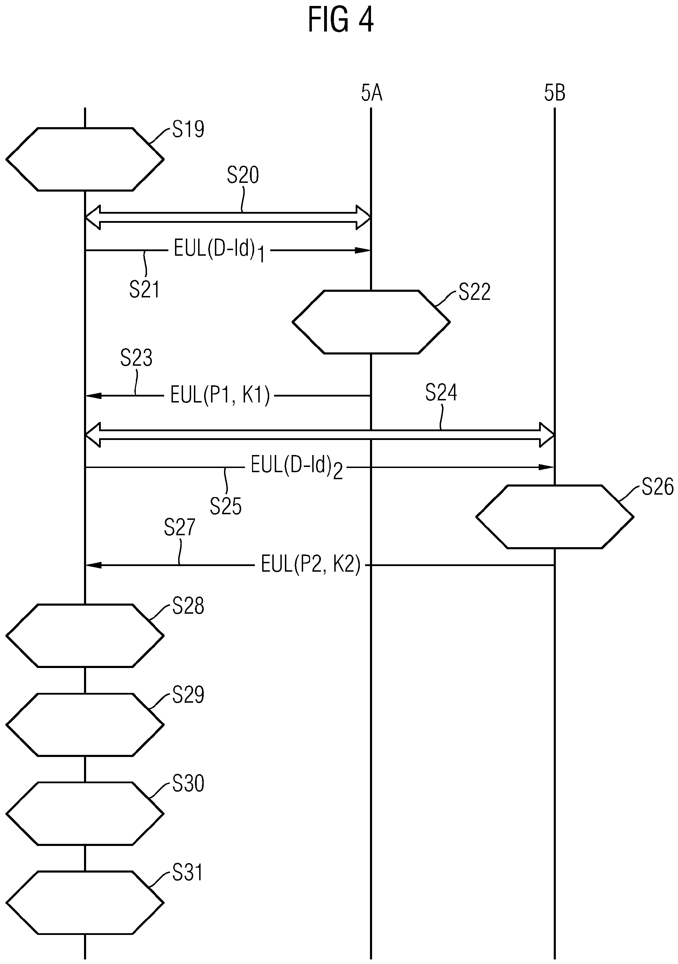

Fig. 4 zeigt ein weiteres Signaldiagramm zur Erläuterung eines weiteren Schrittes des erfindungsgemäßen Verfahrens. Fig. 4 stellt dar, wie ein Datenobjekt DO durch einen Nutzer genutzt werden kann. Bei diesem Nutzer kann es sich um einen Anwender 4 handeln, der über einen Client-Rechner 3 Zugang zu den EDRM-Servern 5A, 5B hat. Bei dem Nutzer kann es sich beispielsweise um einen Mitarbeiter eines weiteren Unternehmens D handeln, der auf das von dem Unternehmen C erzeugte EDRM-geschützte Datenobjekt DO zugreifen möchte, welches sich aus Datenobjekten $D_A$, $D_B$ der Unternehmen A, B zusammensetzt. In einem Schritt S19 findet der Anwender das EDRM-geschützte Datenobjekt, welches eine bestimmte Datenobjektidentifizierung D-ID aufweist, und möchte auf dieses Datenobjekt DO zugreifen, das heißt es beispielsweise lesen oder in sonstiger Weise bearbeiten. Nach einer Authentisierung des Anwenders gegenüber dem EDRM-Server 5A in Schritt S20 sendet der Anwender eine Anforderung zur Überlassung einer End-User-Licence EUL für das Teildokument $D_A$ mit der Erkennung D-$ID_A$ im Schritt S21. Der EDRM-Server 5A bestimmt den Dokumententeilschlüssel $K_1$ und das Teilzugriffsrecht $P_1$ für dieses Datendokument $D_A$ im Schritt S22 und übermittelt die ermittelten Teilzugriffsrechte $P_1$ sowie den Teilschlüssel $K_1$ innerhalb einer End-User-Licence EUL in Schritt S23 an den anfragenden Nutzer. Dieser authentisiert sich im Schritt S24 auch gegenüber dem zweiten EDRM-Server 5B und verlangt im Schritt S25 eine End-User-Licence EUL auch für das zweite Teildokument $D_B$ mit der Dokumenten-ID D-$ID_B$ von dem zweiten Server 5B. Der zweite EDRM-Server 5B bestimmt im Schritt S26 die Teilzugriffsrechte $P_i$ und den Teilschlüssel $K_i$ für das Datenobjekt $D_B$ und übermittelt diese in einer End-User-Licence EUL im Schritt S27 an den anfragenden Nutzer. In einem weiteren Schritt S28 wird die Zugriffsrechteableitungsfunktion PDF für die Zugriffsrechte DP des Nutzers auf das EDRM-geschützte Datenobjekt DO, welches sich aus den Datenobjekten $D_A$, $D_B$ zusammensetzt, berechnet. Die Zugriffsrechte DP des Nutzers auf das EDRM-geschützte Datenobjekt werden in Abhängigkeit der Teilzugriffsrechte $P_1$, $P_2$ auf die beiden Datenobjekte $D_A$, $D_B$ gebildet, die in dem EDRM-geschützten Datenobjekt DO enthalten sind.

In einem weiteren Schritt S29 wird ein Datenobjektschlüssel DK für das EDRM-geschützte Datenobjekt DO mittels einer Schlüsselableitungsfunktion KDF berechnet. Abschließend erfolgt eine Entschlüsselung des EDRM-geschützten Datenobjektes im Schritt S30 unter Verwendung des berechneten Datenobjektschlüssels DK. Schließlich wird das Datenobjekt DO im Schritt S31 entsprechend den für dieses EDRM-geschützte Datenobjekt ermittelten Zugriffsrechten DP dem Nutzer zur Verfügung gestellt.

Wie man aus Fig. 4 erkennen kann, werden beim Zugriff auf ein EDRM-geschütztes Datenobjekt DO Teilinformationen von zwei verschiedenen EDRM-Servern 5A, 5B abgefragt und die empfangenen Informationen werden verknüpft, um den Dokumentenschlüssel DK und die Zugriffsrechte DP bzw. die Dokumentenpolicy DP auf das EDRM-geschützte Datenobjekt zu ermitteln bzw. zu berechnen.

Das erfindungsgemäße Verfahren kann mittels eines Anwendungsprogramms mit Programmbefehlen zur Durchführung des Verfahrens implementiert werden. Dieses Anwendungsprogramm ist bei einer möglichen Ausführungsform auf einem Datenträger gespeichert, der durch eine Ausleseeinheit eines Client-Rechners 3 ausgelesen werden kann. Bei einer alternativen Ausführungsform lädt der Client-Rechner 3 das in einem Server gespeicherte Anwendungsprogramm über das Netzwerk 2 herunter. Die Zugriffsrechteableitungsfunktion PDF und die Schlüsselableitungsfunktion KDF können öffentlich zugänglich auf einem Server abgelegt sein und von dem Client-Rechner 3 heruntergeladen werden.

Die Zugriffsrechteableitungsfunktion PDF und die Schlüsselableitungsfunktion KDF können in dem Anwendungsprogramm implementiert sein.

Bei einer alternativen Ausführungsform des erfindungsgemäßen Systems ist die Zugriffsrechteableitungsfunktion PDF und die Schlüsselableitungsfunktion KDF geheim bzw. nicht-öffentlich zugänglich und werden den Nutzern beispielsweise erst nach einer entsprechenden Authentisierung zur Verfügung gestellt. Bei einer möglichen Ausführungsform des erfindungsgemäßen Systems 1 ist die Zugriffsrechteableitungsfunktion PDF und die Schlüsselableitungsfunktion KDF hardwaremäßig bzw. schaltungstechnisch in einer Berechnungseinheit des Client-Rechners 3 implementiert bzw. fest verdrahtet vorgesehen. Bei einer möglichen Ausführungsform kann ein Anwender 4, die auf seinem Client-Rechner 3 implementierte Zugriffsrechteableitungsfunktion PDF und die Schlüsselableitungsfunktion KDF nicht auslesen. Bei einer möglichen Ausführungsform ist die in dem System 1 zur Verfügung gestellte Zugriffsrechteableitungsfunktion PDF und die zur Verfügung gestellte Schlüsselableitungsfunktion KDF in bestimmten Zeitabständen änderbar, das heißt die Funktionen werden durch bestimmten Zeitabständen in eine andere Funktion ersetzt.

**Patentansprüche**

1. Verfahren zum Bereitstellen mindestens eines EDRM (Enterprise Digital Rights Management) geschützten Datenobjektes für einen Nutzer, wobei Zugriffsrechte (DP) auf das EDRM-geschützte Datenobjekt (DO) in Abhängigkeit von Teilzugriffsrechten ($P_i$) auf mindestens ein oder mehrere Datenobjekte gebildet werden, die in dem EDRM-geschützten Datenobjekt (DO) enthalten sind, wobei die Zugriffsrechte (DP) auf das EDRM-geschützte Datenobjekt (DO) mittels einer Zugriffsrechteableitungsfunktion (PDF) in Abhängigkeit von den Teilzugriffsrechten ($P_i$) durch einen Client-Rechner (3) des Nutzers berechnet werden; wobei die Zugriffsrechteableitungsfunktion (PDF) durch eine Mehrheitsentscheidung der von unterschiedlichen EDRM-Servern (5A, 5B) ausgelesenen Teilzugriffsrechte ($P_i$) gebildet wird.

2. Verfahren nach Anspruch 1, wobei die Zugriffsrechteableitungsfunktion (PDF) durch eine logische Verknüpfungsfunktion gebildet wird.

3. Verfahren nach Anspruch 2, wobei die logische Zugriffsrechteableitungsfunktion (PDF) eine Schnittmenge der Teilzugriffsrechte ($P_i$) bildet, oder wobei die logische Zugriffsrechteableitungsfunktion (PDF) eine Vereinigungsmenge der Teilzugriffsrechte ($P_i$) bildet, oder

wobei die logische Zugriffsrechteableitungsfunktion (PDF) eine Differenzmenge der Teilzugriffsrechte ($P_i$) bildet.

4. Verfahren nach Anspruch 1 bis 3,
wobei ein Datenobjektschlüssel (DK) des EDRM-geschützten Datenobjektes (DO) in Abhängigkeit von Teilschlüsseln ($K_i$) durch den Client-Rechner (3) des Nutzers berechnet wird.

5. Verfahren nach Anspruch 4,
wobei ein von dem Client-Rechner (3) erzeugtes Datenobjekt (DO) mit dem berechneten Datenobjektschlüssel (DK) verschlüsselt wird.

6. Verfahren nach Anspruch 4 oder 5,
wobei der Datenobjektschlüssel (DK) mittels einer Schlüsselableitungsfunktion (KDF) berechnet wird.

7. Verfahren nach Anspruch 6,
wobei die Schlüsselableitungsfunktion (KDF) eine logische Verknüpfungsfunktion,
eine Konkatenationsfunktion,
eine Hash-Funktion oder
eine Verknüpfung verschiedener Funktionen aufweist.

8. Verfahren nach Anspruch 1 bis 7,
wobei die Teilzugriffsrechte ($P_i$) zum Zugriff auf die in dem EDRM-geschützen Datenobjekt (DO) enthaltenen Datenobjekte und die Teilschlüssel ($K_i$) zur Berechnung des Datenobjektschlüssels (DK) von unterschiedlichen EDRM-Servern (5A, 5B) bereitgestellt werden.

9. Verfahren nach Anspruch 8,
wobei die Teilzugriffsrechte ($P_i$) und die Teilschlüssel ($K_i$) nach erfolgter Authentisierung des Nutzers gegenüber den jeweiligen EDRM-Servern (5A, 5B) auf Anfrage des Nutzers unter Angabe der Dokumentenidentifizierung (D-ID) des Datenobjektes (DO) von den EDRM-Servern (5A, 5B) an den Client-Rechner (3) des Nutzers übertragen werden.

10. Verfahren nach Anspruch 1 bis 9,
wobei für ein durch den Client-Rechner (3) des Nutzers erzeugtes Datenobjekt (DO) ein zugehöriges Rechteobjekt (RO) generiert wird, das Zugriffsrechte ($P_i$) von Nutzern oder Nutzergruppen auf das erzeugte Datenobjekt (DO) angibt.

11. Verfahren nach Anspruch 10,
wobei das zu dem Datenobjekt (DO) zugehörige Rechteobjekt (RO) mit einem öffentlichen Schlüssel ($K_{pub}$) eines EDRM-Servers (5A, 5B) verschlüsselt wird und zusammen mit dem durch den berechneten Datenobjektschlüssel (DK) verschlüsselten Dateninhalt (DI) des Datenobjektes (DO) und der Dokumentenidentifizierung (D-ID) des Datenobjektes an den jeweiligen EDRM-Server (5A, 5B) signiert übertragen wird.

12. Verfahren nach Anspruch 11,
wobei der EDRM-Server (5A, 5B) nach Verifizierung der empfangenen Signatur das verschlüsselt übertragene Rechteobjekt (RO) mit einem privaten Schlüssel ($K_{priv}$) des EDRM-Servers (5A, 5B) entschlüsselt und speichert.

13. Verfahren nach Anspruch 12,
wobei der EDRM-Server (5A, 5B) nach Verifizierung der empfangenen Signatur den verschlüsselt übertragenen Dateninhalt des Datenobjektes (DO) mit dem Datenobjektschlüssel (DK) des Datenobjektes entschlüsselt und speichert.

14. Verfahren nach Anspruch 13,
wobei der EDRM-Server (5A, 5B) den entschlüsselten Dateninhalt des Datenobjektes oder den noch verschlüsselten Dateninhalt des Datenobjektes bei sich oder in einem File-Server (6) speichert.

15. Verfahren nach Anspruch 1 bis 14,
wobei das Datenobjekt (DO) durch ein Dokument oder eine Softwarekomponente gebildet wird.

16. System zum Bereitstellen von EDRM-geschützten Datenobjekten für Nutzer,
wobei Zugriffsrechte (DP) auf ein EDRM-geschütztes Datenobjekt (DO) in Abhängigkeit von Teilzugriffsrechten ($P_i$) auf mindestens ein oder mehrere Datenobjekte gebildet werden, die in dem jeweiligen EDRM-geschützten Datenobjekt (DO) enthalten sind,
wobei die Zugriffsrechte (DP) auf das EDRM-geschützte Datenobjekt (DO) durch einen Client-Rechner (3) des Nutzers mittels einer Zugriffsrechteableitungsfunktion (PDF) in Abhängigkeit von den Teilzugriffsrechten ($P_i$) berechnet werden, die von unterschiedlichen EDRM-Servern (5A, 5B) bereitgestellt werden, wobei die Zugriffsrechteableitungsfunktion (PDF) durch eine Mehrheitsentscheidung der von unterschiedlichen EDRM-Servern (5A, 5B) ausgelesenen Teilzugriffsrechte ($P_i$) gebildet wird.

17. System nach Anspruch 16,
wobei ein Datenobjektschlüssel (DK) des EDRM-geschützten Datenobjektes durch den Client-Rechner (3) des Nutzers mittels einer Schlüsselableitungsfunktion (KDF) in Abhängigkeit von Teilschlüsseln ($K_i$) berechnet wird, die von unterschiedlichen EDRM-Servern (5A, 5B) bereitgestellt werden.

## Claims

1. Method for providing at least one EDRM (Enterprise Digital Rights Management) protected data object for a user, access rights (DP) to the EDRM-protected data object (DO) being formed on the basis of partial access rights ($P_i$) to at least one or more data objects contained in the EDRM-protected data object (DO), the access rights (DP) to the EDRM-protected data object (DO) being calculated by a client computer (3) belonging to the user by means of an access rights derivation function (PDF) on the basis of the partial access rights ($P_i$);
the access rights derivation function (PDF) being formed by a majority decision of the partial access rights ($P_i$) read from different EDRM servers (5A, 5B).

2. Method according to Claim 1,
the access rights derivation function (PDF) being formed by a logical combination function.

3. Method according to Claim 2,
the logical access rights derivation function (PDF) forming an intersection of the partial access rights ($P_i$), or
the logical access rights derivation function (PDF) forming a union set of the partial access rights ($P_i$), or
the logical access rights derivation function (PDF) forming a difference set of the partial access rights ($P_i$).

4. Method according to Claims 1 to 3,
a data object key (DK) of the EDRM-protected data object (DO) being calculated by the client computer (3) belonging to the user on the basis of partial keys ($K_i$).

5. Method according to Claim 4,
a data object (DO) generated by the client computer (3) being encrypted using the calculated data object key (DK).

6. Method according to Claim 4 or 5,
the data object key (DK) being calculated by means of a key derivation function (KDF).

7. Method according to Claim 6,
the key derivation function (KDF) having a logical combination function,
a concatenation function,
a hash function, or
a combination of different functions.

8. Method according to Claims 1 to 7,
the partial access rights ($P_i$) for accessing the data objects contained in the EDRM-protected data object (DO) and the partial keys ($K_i$) for calculating the data object key (DK) being provided by different EDRM servers (5A, 5B).

9. Method according to Claim 8,
the partial access rights ($P_i$) and the partial keys ($K_i$) being transmitted from the EDRM servers (5A, 5B) to the client computer (3) belonging to the user, after the user has been authenticated with respect to the respective EDRM servers (5A, 5B), on the request of the user and with a statement of the document identification (D-ID) of the data object (DO).

10. Method according to Claims 1 to 9,
an associated rights object (RO) being generated for a data object (DO) generated by the client computer (3) belonging to the user, which rights object specifies access rights ($P_i$) of users or user groups to the generated data object (DO).

11. Method according to Claim 10,
the rights object (RO) associated with the data object (DO) being encrypted using a public key ($K_{pub}$) from an EDRM server (5A, 5B) and being transmitted in a signed manner to the respective EDRM server (5A, 5B) together with the data contents (DI) of the data object (DO) encrypted by means of the calculated data object key (DK) and the document identification (D-ID) of the data object.

12. Method according to Claim 11,
the EDRM server (5A, 5B) decrypting the rights object (RO) transmitted in an encrypted manner using a private key ($K_{priv}$) of the EDRM server (5A, 5B) and storing said rights object after verifying the received signature.

13. Method according to Claim 12,
the EDRM server (5A, 5B) decrypting the data contents of the data object (DO) transmitted in an encrypted manner using the data object key (DK) of the data object and storing said data contents after verifying the received signature.

14. Method according to Claim 13,
the EDRM server (5A, 5B) storing the decrypted data contents of the data object or the still encrypted data contents of the data object in itself or in a file server (6).

15. Method according to Claims 1 to 14,
the data object (DO) being formed by a document or a software component.

16. System for providing EDRM-protected data objects for users,
access rights (DP) to an EDRM-protected data object (DO) being formed on the basis of partial access rights ($P_i$) to at least one or more data objects which are contained in the respective EDRM-protected data object (DO),

the access rights (DP) to the EDRM-protected data object (DO) being calculated by a client computer (3) belonging to the user by means of an access rights derivation function (PDF) on the basis of the partial access rights ($P_i$) provided by different EDRM servers (5A, 5B), the access rights derivation function (PDF) being formed by a majority decision of the partial access rights ($P_i$) read from different EDRM servers (5A, 5B).

**17.** System according to Claim 16,
a data object key (DK) of the EDRM-protected data object being calculated by the client computer (3) belonging to the user by means of a key derivation function (KDF) on the basis of partial keys ($K_i$) which are provided by different EDRM servers (5A, 5B).

**Revendications**

**1.** Procédé destiné à la mise à disposition d'au moins un objet de données à protection EDRM (Enterprise Digital Rights Management = gestion des droits numériques en entreprise) pour un utilisateur, dans lequel des droits d'accès (DP) à l'objet de données (DO) à protection EDRM sont formés en fonction de droits d'accès partiel ($P_i$) à au moins un ou plusieurs objets de données, qui sont contenus dans l'objet de données (DO) à protection EDRM,
dans lequel les droits d'accès (DP) à l'objet de données (DO) à protection EDRM sont calculés par un ordinateur client (3) de l'utilisateur au moyen d'une fonction de déduction de droits d'accès (PDF) en fonction des droits d'accès partiels ($P_i$) ;
dans lequel la fonction de déduction de droits d'accès (PDF) est formée par une décision majoritaire des droits d'accès partiel ($P_i$) lus par différents serveurs EDRM (5A, 5B).

**2.** Procédé selon la revendication 1,
dans lequel la fonction de déduction de droits d'accès (PDF) est formée par une opération booléenne logique.

**3.** Procédé selon la revendication 2,
dans lequel la fonction de déduction de droits d'accès (PDF) logique forme un recoupement des droits d'accès partiel ($P_i$), ou
dans lequel la fonction de déduction de droits d'accès (PDF) logique forme une réunion des droits d'accès partiel ($P_i$), ou dans lequel la fonction de déduction de droits d'accès (PDF) logique forme une différence des droits d'accès partiel ($P_i$).

**4.** Procédé selon les revendications 1 à 3,
dans lequel une clé d'objet de données (DK) de l'objet de données (DO) à protection EDRM est calculée par l'ordinateur client (3) de l'utilisateur en fonction des clés partielles ($K_i$).

**5.** Procédé selon la revendication 4,
dans lequel un objet de données (DO) généré par l'ordinateur client (3) est crypté avec la clé d'objet de données (DK) calculée.

**6.** Procédé selon la revendication 4 ou 5,
dans lequel la clé d'objet de données (DK) est calculée au moyen d'une fonction de déduction de clé (KDF).

**7.** Procédé selon la revendication 6,
dans lequel la fonction de déduction de clé (KDF) présente une opération booléenne logique, une fonction de concaténation, une fonction de hachage ou une opération booléenne de différentes fonctions.

**8.** Procédé selon les revendications 1 à 7,
dans lequel les droits d'accès partiel ($P_i$) destinés à un accès aux objets de données contenus dans l'objet de données (DO) à protection ERDM et la clé partielle ($K_i$) destinée au calcul de la clé d'objet de données (DK) sont mis à disposition par différents serveurs ERDM (5A, 5B).

**9.** Procédé selon la revendication 8,
dans lequel les droits d'accès partiel ($P_i$) et les clés partielles ($K_i$) après une authentification réussie de l'utilisateur par rapport aux serveurs EDRM (5A, 5B) respectifs lors d'une demande de l'utilisateur en indiquant l'identification de documents (D-ID) de l'objet de données (DO) sont transmis par les serveurs EDRM (5A, 5B) à l'ordinateur client (3) de l'utilisateur.

**10.** Procédé selon les revendications 1 à 9,
dans lequel pour un objet de données (DO) généré par l'ordinateur client (3) de l'utilisateur un objet à droits (RO) correspondant est généré, qui indique des droits d'accès ($P_i$) d'utilisateurs ou de groupes d'utilisateurs à l'objet de données (DO) généré.

**11.** Procédé selon la revendication 10,
dans lequel l'objet à droits (RO) correspondant à l'objet de données (DO) est crypté avec une clé publique ($K_{pub}$) d'un serveur EDRM (5A, 5B) et conjointement avec le contenu de données (DI) de l'objet de données (DO) crypté par la clé d'objet de données (DK) calculée et l'identification de document (D-ID) de l'objet de données est transmise signée au serveur EDRM (5A, 5B) respectif.

**12.** Procédé selon la revendication 11,
dans lequel le serveur EDRM (5A, 5B) après vérification de la signature reçue décrypte et met en mémoire l'objet à droits (RO) transmis de manière cryptée avec une clé privée ($K_{priv}$) du serveur EDRM (5A, 5B).

13. Procédé selon la revendication 12, dans lequel le serveur EDRM (5A, 5B) après vérification de la signature reçue décrypte et met en mémoire le contenu de données de l'objet de données (DO) transmis de manière cryptée avec la clé d'objet de données (DK) de l'objet de données.

14. Procédé selon la revendication 13, dans lequel le serveur EDRM (5A, 5B) met en mémoire le contenu de données décrypté de l'objet de données ou le contenu de données encore crypté de l'objet de données dans lui-même ou dans un serveur de fichiers (6).

15. Procédé selon les revendications 1 à 14, dans lequel l'objet de données (DO) est formé par un document ou un composant logiciel.

16. Système destiné à la mise à disposition d'objets de données à protection EDRM pour des utilisateurs, dans lequel des droits d'accès (DP) à un objet de données (DO) à protection EDRM en fonction de droits d'accès partiel ($P_i$) sont formés sur au moins un ou plusieurs objets de données, qui sont contenus dans l'objet de données (DO) à protection EDRM respectif, dans lequel les droits d'accès (DP) à l'objet de données (DO) à protection EDRM sont calculés par un ordinateur client (3) de l'utilisateur au moyen d'une fonction de déduction de droits d'accès (PDF) en fonction des droits d'accès partiels ($P_i$) qui sont mis à disposition par différents serveurs EDRM (5A, 5B), dans lequel la fonction de déduction de droits d'accès (PDF) est formée par une décision majoritaire des droits d'accès partiels ($P_i$) lus par différents serveurs EDRM (5A, 5B).

17. Système selon la revendication 16, dans lequel une clé d'objet de données (DK) de l'objet de données à protection EDRM est calculée par l'ordinateur client (3) de l'utilisateur au moyen d'une fonction de déduction de clé (KDF) en fonction de clés partielles ($K_i$) qui sont mises à disposition par différents serveurs EDRM (5A, 5B).

FIG 1

# FIG 2

DO-I

5A

S1

S2

S3

S4

S5

OK

# FIG 3

# FIG 4

5A                    5B

S19

S20

EUL(D-Id)$_1$

S21

S22

S23

EUL(P1, K1)                    S24

EUL(D-Id)$_2$

S25                    S26

S27

EUL(P2, K2)

S28

S29

S30

S31

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5917912 A